# EUROPEAN PATENT SPECIFICATION

(11) **EP 3 109 723 B1**
(45) Date of publication and mention of the grant of the patent: **24.10.2018**
(21) Application number: 15382338.0
(22) Date of filing: 26.06.2015
(51) Int. Cl.: G05D 1/06, G05D 1/10

(54) **METHOD AND SYSTEM FOR CONTROLLING THE FLIGHT OF AN AIRCRAFT SUBJECTED TO AT LEAST TWO REQUIRED TIME OF ARRIVAL CONSTRAINTS**
VERFAHREN UND SYSTEM ZUR STEUERUNG DES FLUGES EINES FLUGZEUGES MIT MINDESTENS ZWEI ERFORDERLICHEN ANKUNFTSZEITBESCHRÄNKUNGEN
PROCÉDÉ ET SYSTÈME POUR CONTRÔLER LE VOL D'UN AVION SOUMIS À AU MOINS DEUX CONTRAINTES D'HEURE D'ARRIVÉE REQUISES

(43) Date of publication of application: 28.12.2016
(60) Divisional application: 18174688.4
(73) Proprietor: The Boeing Company, Chicago, IL 60606-1596 (US)
(72) Inventor: Garrido Lopez, David, 28042 Madrid (ES)
(74) Representative: Carvajal y Urquijo, Isabel

(56) References cited:
- WO-A1-02/093281
- US-B2- 8 150 565
- Michael R C Jackson: "2007 AIAA ATIO Conference Airborne Required Time of Arrival (RTA) Control and Integration with ATM", , 30 September 2007 (2007-09-30), XP055243409, Retrieved from the Internet: URL:https://smartech.gatech.edu/bitstream/ handle/1853/34301/19_2007-12-RTA-slides-fo r-E-Operations.pdf [retrieved on 2016-01-21]

## Description

### FIELD OF THE INVENTION

This disclosure relates to a method of controlling the flight of an aircraft subjected to at least two required time of arrival constraints and more specifically to a method to control the flight of an aircraft wherein the aircraft trajectory satisfies two required times of arrival at two different waypoints of a cruise-descent operation, by iterating the aircraft cruise speed and descent speed independently. The method of controlling the flight of the aircraft starts during the cruise phase and at least two of the waypoints lie in the descent phase of the flight. The disclosure also relates to the system for controlling the flight of an aircraft subjected to at least two required time of arrival constraints and to the computer program which, when executed, carries out the cited method.

### BACKGROUND OF THE INVENTION

Air Traffic Management modernization is evolving from Surveillance-Based Management (control based on knowing where aircraft are) toward Trajectory-Based Management (control based on knowing where aircraft will be). Due to this inherent dependency on trajectory prediction, this concept requires the aircraft trajectory to avoid large unpredictable deviations.

Most commercial aircraft have a Required Time of Arrival (RTA) function available which is potentially a very useful airside function to meet time constraints imposed by Air Traffic Management systems, and in particular, by Arrival Managers of an airport terminal area.

The aircraft trajectory under RTA control becomes predictable in the sense that the aircraft will hopefully reach the RTA target waypoint at the predicted (and required) time.

The RTA function of an aircraft is activated when the pilot sets a required time of arrival at a target waypoint ahead of the current position. An important application of the RTA function occurs when the airline, the Air Traffic Management, the pilot, or another authority, imposes an arrival time constraint close to the destination airport. In that case, the RTA function may be activated when the flight is still in cruise phase, but the target waypoint is well within the phase of descent. The function then predicts a trajectory that satisfies the time constraint, and modifies the flight speeds accordingly. However, current operational RTA functions consider only one RTA at a single waypoint.

If the flight is in cruise phase and the target waypoint is in the descent phase, a conventional RTA function does not predict trajectories varying cruise speed and descent speed, and more specifically cruise Mach speed and descent Calibrated Air Speed (CAS), independently. Instead, the conventional RTA function iterates over the Cost Index (CI) which couples Mach and CAS variations. Each CI defines a unique Mach/CAS combination, given the cruise altitude, weight, and meteorological conditions. The CI is used for the initial trajectory prediction as well as for speed corrections during the operation.

A Trajectory-Based Arrival Management System may set time windows at crucial waypoints, for instance, at a waypoint where more than one arrival converges, and later at a waypoint closer to runway approach in order to maintain the proper sequence of aircraft landing. Thus, imposing RTAs at two different waypoints would benefit the merging and spacing of the incoming traffic at both high altitudes and then closer to the final approach to the runway.

However, time deviations with respect to the initially estimated arrival times at intermediate waypoints cannot be prevented by conventional RTA functions. Current solutions, such as the one disclosed in patent document US8150565-B2, break the reference trajectory in as many trajectory segments as intermediate waypoints, and calculate a cruise/descent speed pair for each trajectory segment, wherein each cruise/descent speed pair meets the corresponding RTA at the intermediate waypoint ahead. This solution disregards arrival times beyond the next RTA waypoint and calculates a plurality of trajectories which necessarily implies a number of speed changes and more computational requirements. This solution is therefore, inefficient.

Current computer capabilities permit calculating many different flyable Mach/CAS combinations that are not coupled by the CI. Arbitrary cruise/descent speed pairs can be used to plan trajectories as long as speeds are within the boundaries of the aircraft speed limits.

### SUMMARY OF THE INVENTION

To achieve the advantages and avoid the drawbacks listed above, the present disclosure provides a significant improvement over existing solutions since it describes a method and a system for controlling the flight of an aircraft subjected to at least two required time of arrival constraints. The main objective of the present invention is to calculate a single trajectory that meets at least two required times of arrival at the corresponding different waypoints by considering independent changes of cruise speed and descent speed for trajectory predictions during execution of RTA function.

A first embodiment of the present invention is a method of controlling the flight of an aircraft subjected to at least two required time of arrival constraints. The method comprises the steps of:
a) receiving at least two required time of arrivals (RTAₙ), each required time of arrival (RTAₙ) at a corresponding target waypoint (WPTₙ), each target waypoint(WPTₙ) being different from each other and at least two target waypoints being located in a descent phase of the flight;
b) determining a set of cruise speed and descent speed pairs for each one of the required time of arrivals wherein each pair satisfies the corresponding required time of arrival (RTAₙ) at the corresponding target waypoint (WPTₙ),
c) selecting a single cruise speed and descent speed pair existing in each one of the sets of cruise speed and descent speed pairs; and,
d) determining a single aircraft trajectory that satisfies the selected cruise speed and descent speed pair.

The method is executed, at least the first time, during the cruise phase of the aircraft. The obtained single aircraft trajectory is sent to the Flight Management System (FMS) of the aircraft that adapts the speeds and trajectory.

For a cruise-descent operation, the aircraft trajectory is defined by the cruise speed and the descent speed. For typical cruise altitudes above 30000 ft., which is the case for a vast majority of commercial flights, the cruise speed is expressed as a Mach number. Most of the descent is generally flown at constant Calibrated Air Speed (CAS).

Advantageously, step b) may comprise determining each set of cruise speed and descent speed pairs by obtaining the descent speed that satisfies the corresponding required time of arrival for a given cruise speed or by obtaining the cruise speed that satisfies the corresponding required time of arrival for a given descent speed.

Advantageously, step c) may comprise executing a root-finding algorithm for selecting the single cruise speed and descent speed pair. More specifically, step c) may execute the Broyden's method. Other algorithms may be used for obtaining the root (the only solution) of the functions that define the sets of Mach/CAS pairs.

Advantageously, step b) may comprise establishing contour maps wherein each isocontour of the contour map represents a subset of cruise speed and descent speed pairs that satisfies a single required time of arrival at a corresponding target waypoint. For this particular embodiment in which contour maps are used, step d) may comprise selecting the single cruise speed and descent speed pair corresponding to the intersection of all the isocontours of the contour map.

Advantageously, the method further comprises receiving a set of predefined or measured flight conditions for delimiting the aircraft speed limits. This set of flight conditions may comprise at least one of a weight of the aircraft, a cruise altitude, an aircraft speed and measured wind and temperature. More advantageously, the set of flight conditions may further comprise a flight plan and forecast weather conditions.

Advantageously, the method may comprise computing a predicted flight trajectory of the aircraft based on the received set of flight conditions and the sets of cruise speed and descent speed pairs obtained in step b). The predicted flight trajectory will comprise at least one of a predicted lateral path, estimated arrival times at the intermediate waypoints and estimated altitudes reached at said intermediate waypoints.

Advantageously, the method is dynamically and continuously executed during flight so as to modify the single aircraft trajectory by changing the cruise speed and descent speed of the aircraft. Therefore, the method dynamically modifies the aircraft speeds (and thus the trajectory) in order to assure that the aircraft is at the waypoints at the corresponding required times of arrival.

A second object of the present invention is a system for controlling the flight of an aircraft subjected to at least two required time of arrival constraints. The system comprises a Flight Management System (FMS) in communication with a trajectory generator and a speed profile generator. Said FMC is configured for executing the method previously disclosed. The speed profile generator is configured for receiving a single cruise speed and descent speed pair and generating a speed profile signal in response to said single cruise speed and descent speed pair. The trajectory generator is configured for receiving the speed profile signal and generating the single aircraft trajectory in response to the speed profile signal, so that the aircraft trajectory meets each required time of arrival at the corresponding target waypoints.

Advantageously, the FMS is configured for receiving a weight of the aircraft and a cruise altitude and determining the aircraft speed limits.

Advantageously, the FMS is configured for receiving a flight plan, weather conditions, initial aircraft conditions and a cruise altitude and determining the sets of cruise speed and descent speed pairs corresponding to each one of the required time of arrivals.

A third object of the present invention is a computer program comprising program code which, when executed, carries out the method previously described.

Therefore, the present invention determines a single global trajectory that will satisfy multiple RTAs. This single trajectory will be defined by a single cruise Mach and descent CAS that can be altered independently of each other, which will meet multiple RTAs without having to break the reference trajectory in a plurality of trajectory segments with different cruise and descent speeds.

The new degree of freedom provided by the present invention allows meeting additional required times of arrival at different waypoints, by varying Mach and CAS independently, provides a solution to the problem of multiple RTA.

### BRIEF DESCRIPTION OF THE FIGURES

Figure 1.- Shows a first part of DIRTY Standard Arrival Procedure (STAR) of a flight arriving to the Atlanta International Airport.
Figure 2.- Shows a second part of DIRTY STAR of a flight arriving to the Atlanta International Airport, shown in figure 1.
Figure 3.- Shows the lateral path of the flight example shown in figures 1 and 2.
Figure 4.- Shows the pressure altitude (top graph) and Calibrate airspeed (bottom graph) of a typical continuous descent trajectory of a conventional commercial flight, as a function of flown distance.
Figure 5.- Shows the pressure altitude graph as a function of flown distance of the flight example of figures 1 to 3.
Figure 6.- Shows a isocontours graph of two estimated arrival times for two different RTA at two different waypoints for the flight example of figures 1 to 3 and 5, as a function of the descent CAS and the Cruise Mach and descent Mach. It also shows the conventional dependency of cruise Mach and descent CAS as a function of the Cost Index.
Figure 7.- Shows a isocontours graph wherein a comparison of the speeds calculated to meet the respective time constraints at the two waypoints when functions activated and the corrected speeds at a later time.
Figure 8.- Shows a flow diagram in which a particular embodiment of the method of the invention is disclosed.

### DETAILED DESCRIPTION OF THE INVENTION

Next, a description of several examples of particular embodiments of the present invention is carried out, with illustrative character and without limitation, making reference to the numbering used in the figures.

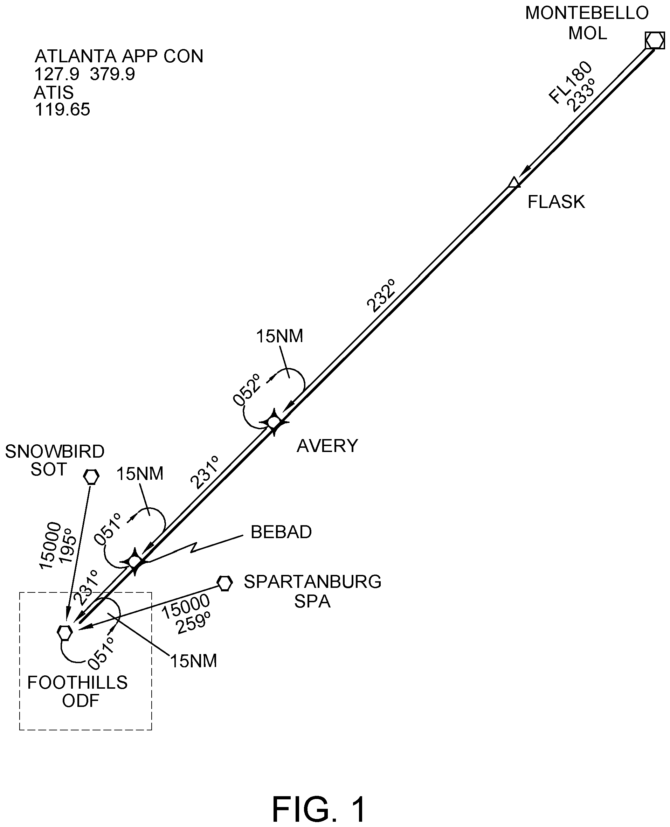

In a particular example of the method proposed in the present disclosure is provided a flight with the following conditions:
- Aircraft: Boeing 737-800
- Initial conditions: cruising at an altitude of 35000 ft., at maximum landing weight (MLW = 144,000 lbs.).
- The lateral path of the flight is a standard arrival into Atlanta International Airport (see figures 1, 2, and 3).
- Weather conditions: No winds, and standard atmosphere.

For typical cruise altitudes above 30000 ft., which is the case for a vast majority of commercial flights and for this particular example, the cruise speed is expressed as a Mach number. Most of the descent is generally flown at constant Calibrated Air Speed (CAS).

The initial point of the aircraft for this particular example is "Montebello (MOL)". A few miles into the arrival, when the along-track distance to waypoint "DIRTY" is 200 NM, the pilot sets a RTA at waypoint "DIRTY". Additionally, the pilot also sets a different RTA at waypoint "Foothills (ODF)", which is 50 NM before reaching waypoint "DIRTY". For this particular example only two RTA's at two target waypoints have been set, although more RTA's at different waypoints might be set too.

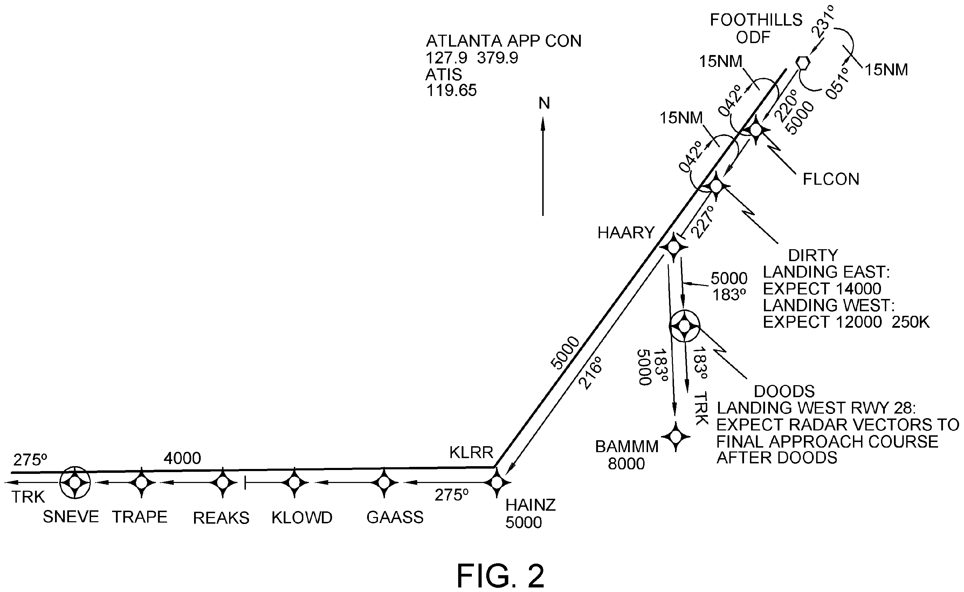

Figures 1 and 2 show the flight details of a selected arrival procedure of an aircraft. This arrival procedure is a part of a flight that ends at runaway "08L" of the Atlanta International Airport (KATL). Details of the aircraft approach operation to the airport are not shown since they do not affect to the RTA problem described herein. More specifically, figure 1 shows a first part of the "DIRTY" transition route for arriving to the Atlanta International Airport and figure 2 shows the second part of said "DIRTY" transition route. "DIRTY" is an important metering fix because it is a few miles before the aircraft is directed to the particular runway approach (see points "Haary" and "Doods" in figure 2), and a correct spacing between aircraft is crucial over there to ensure a correct spacing at the runways. In "ODF" three different transitions to the arrival converge, specifically, a first transition from "Montebello (MOL)", a second transition from "Snowbird (SOT)" and a third transition from "Spartanburg (SPA)". Then, at least three aircrafts might merge in waypoint "ODF" at the same time with the corresponding conflicts and subsequent safety risks that it might cause. Therefore, the timing where aircraft arrive to this waypoint is crucial in order to merge the traffic flow while ensuring minimum separations between aircrafts and so avoiding conflicts. Therefore, the necessity of establishing a first RTA at "ODF" and a second RTA at "DIRTY" can be derived in order to minimize conflicts and risks.

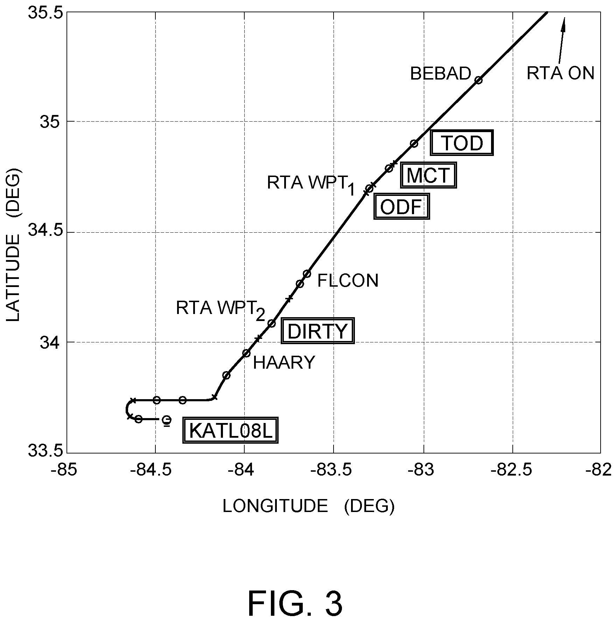

Figure 3 shows the lateral path of the flight example of figures 1 and 2 starting from the instant in which the pilot turns on the RTA function at "Montebello MOL" until the aircraft is landed at the corresponding runaway of the Atlanta Airport ("KATL08L"). More specifically, it shows the position of waypoint "ODF" (RTA WPT₁ hereafter) and waypoint "DIRTY" (RTA WPT₂ hereafter) relative to the lateral path of the flight example. RTA WPT₁ is shortly after the beginning of descent (Top of descent "TOD") and the initial Mach to CAS transition location (MCT). RTA WPT₂ has an altitude constraint of 14000 ft. and is more than 2/3 into the descent. Other intermediate waypoints as BEBAD, FLCON and HAARY are shown in order to clearly define the lateral path of the aircraft. In this particular example, both waypoints have been set during the descent phase of the flight.

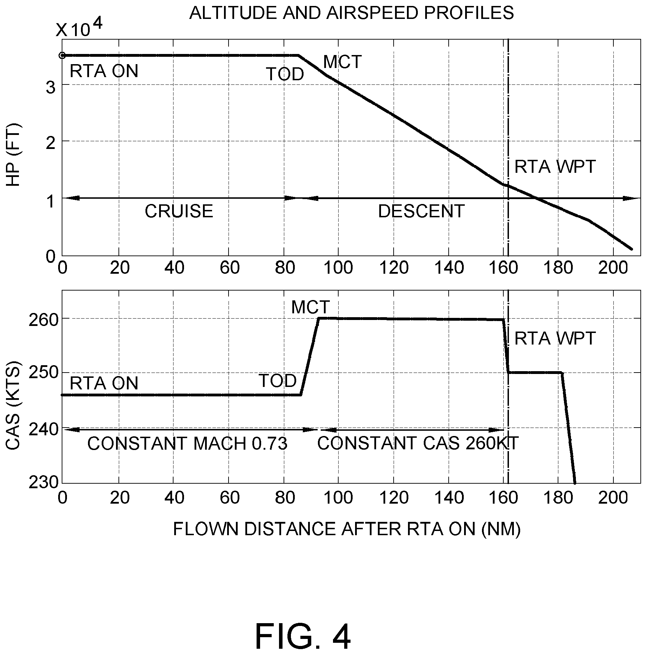

Figure 4 shows a typical example of pressure altitude and Calibrate Airspeed (CAS) as a function of the along-track distance for an arrival procedure of a commercial flight (not of this particular example). Specifically the upper graph shows the altitude profile of a commercial flight as a function of the along track distance where the graph shows the distance from the instant in which the pilot turn on the RTA function until the aircraft is landed, which takes about 205NM. This upper graph shows the Top of Descent point (TOD) and the Mach to CAS transition (MCT) point at which the aircraft changes from the cruise phase to the descent phase. The cruise altitude of the aircraft is around 35000 ft. The only waypoint established for this particular example is located at 162NM from the position in which the pilot turns on the RTA function. The bottom graph shows the airspeed profiles of the aircraft during the cruise/descent operation. Specifically, during the cruise phase and the beginning of the descent phase (until the aircraft arrives to the MCT point) the aircraft flights with a constant Mach number of 0.73 and during the descent phase the aircraft flights at a constant CAS speed of 260KT. Before reaching the destination airport, the aircraft reduces its speed (this is not shown in the figure).

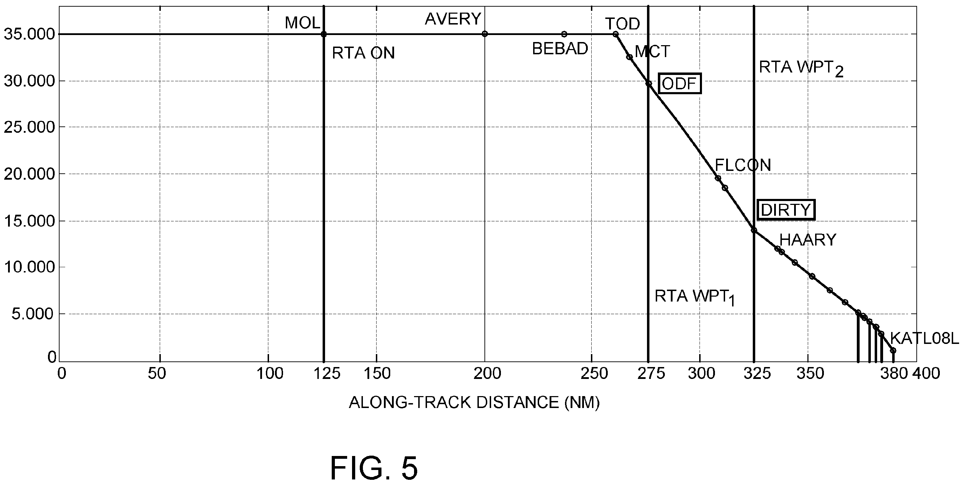

Figure 5 shows the pressure altitude profile as a function of the along track distance for the particular example of figures 1, 2 and 3. For this particular example, the RTA function is turned on at "MOL" (not shown) during the cruise phase and 255NM before arriving to the destination airport "KATL08L". The RTA WPT₂ is set at "DIRTY" that is located in the descent phase of the aircraft. The along-track distance from "MOL" to waypoint "DIRTY" is 200 NM. The RTA WPT₁ is set at "ODF" which is located 50NM before "DIRTY" and 105NM before "KATL08L". "ODF" is also set in the descent phase of the aircraft.

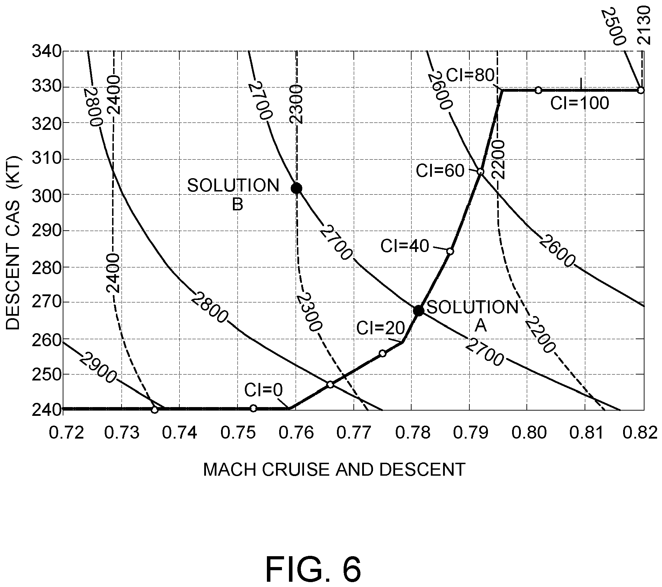

Figure 6 shows the predicted arrival times for RTA WPT₁ and RTA WPT₂ as a function of the cruise Mach and descent CAS for the flight example of figures 1, 2, 3 and 5. The boundaries of this diagram are the Mach and CAS limits. For this particular example the RTA function will never program CAS speeds below 240 KT or above 330 KT, and will never program Mach speeds below 0.72 or above 0.82. These speed limits correspond to the case of an aircraft flying at an altitude of 35000 ft. and with a weight of 144,000 lbs. In general, speed limits depend on weight and altitude. The graph represents two overlapped contour maps as a function of cruise Mach and descent CAS: the dashed isocontours represent estimated arrival times at the RTA WPT₁, and the thin solid isocontours represent estimated arrival times at the RTA WPT₂. Times are shown in seconds, and the reference t=0 represents the moment when the pilot activates the RTA function. There is a plurality of combinations of Mach/descent CAS speeds that meet the selected RTA at each one of the selected waypoints.

Each isocontour represents a plurality of Mach/CAS combinations that meets the required time of arrival. Therefore, for a particular embodiment wherein the required time of arrival would be 2200 seconds (36 min and 40 seconds) at waypoint "ODF", the dashed isocontour tagged with "2200" in figure 6 would represent all the possible Mach/CAS combinations that could meet said RTA at said waypoint (within the corresponding aircraft speed limits).

By inspection of figure 6, the earliest time of arrival that can be achieved for RTA WPT₁ (at waypoint "ODF") in this particular case (considering the aircraft speed limits) is 2130 seconds approx. (35 min. and 30 s. past initial time) flying at M=0.82 and CAS=330 KT. The latest time of arrival that can be achieved is 2445 seconds, (40:45 past initial time), flying at M=0.72 and CAS=240 KT (line not shown). For RTA WPT₂ (at waypoint "DIRTY") the minimum time is about 2500 seconds (41:40 past initial time) flying at M=0.82 and CAS=330 KT, and maximum achievable time is 2920 seconds (48:40 past initial time) flying at M=0.72 and CAS=240 KT (line not shown).

Figure 6 also shows the possible cruise Mach and descent CAS combinations as a function of Cost Index (see black dash-dot line superposed to the diagram). Current Flight Management Computers (FMC) iterate over CI to find the Mach/CAS combination that satisfies a given RTA. For this particular example, the pilot enters for RTA WPT₂ (waypoint "DIRTY") a single RTA= initial time + 45 min, as requested by the Arrival Manager. Then the computer will find the trajectory corresponding to the intersection of RTA = 2700s (solid isocontour tagged with 2700) and the Cost Index line. The resulting CI is close to 30 approximately, and the corresponding speeds are M=0.782 CAS=268 KT. This solution is marked as "Solution A" in figure 6 and the cited speeds are the only combination that meets the single RTA at waypoint "DIRTY" as a function of the CI. A given Cost Index implies a balance between fuel and operational costs. If the airline would impose a specific CI close to zero (corresponding to the minimum-fuel consumption trajectory) then the previous RTA could not be met. Besides if the cited Mach/CAS combination (M=0.782 CAS=268 KT) is selected then the only required time of arrival at a second waypoint ahead would be restricted to these aircraft speeds.

In the case in which, in order to avoid conflict with other aircraft merging at "ODF" (RTA WPT₁), the Arrival Manager determines that the aircraft should pass intermediate waypoint "ODF" at a required time of arrival RTA₁=2300 seconds (initial time plus 38:20), the solution provided by the conventional CI-coupled Mach/CAS combination ("Solution A") would not be valid for meeting the time constraint at RTA WPT₁, since "Solution A" leads to an arrival time equal to initial time plus 2225 s. (37:05), which is more than one minute early. A conventional RTA function cannot find a single trajectory that satisfies two time constraints (with some highly unlikely exceptions).

It is clear from Figure 6 that many different Mach/CAS pairs lead to a trajectory satisfying the RTA₂= 2700s at waypoint "DIRTY" other than the CI-coupled pair. These combinations are represented by the thin solid isocontour RTA₂= 2700s. Therefore, it is possible to search for the intersection of this isocontour with the dashed isocontour RTA₁= 2300s, which represents the required arrival time at waypoint "ODF". Therefore, in order to meet both constraints, the aircraft simply has to select the speeds Mach=0.76 and CAS=302 KT, something that is not possible if the aircraft uses CI solutions. This is represented in figure 6 as "Solution B". If more RTA's at different waypoints would be added, the solution would be the intersection of all the isocontours corresponding to each one of the RTA at their corresponding waypoints.

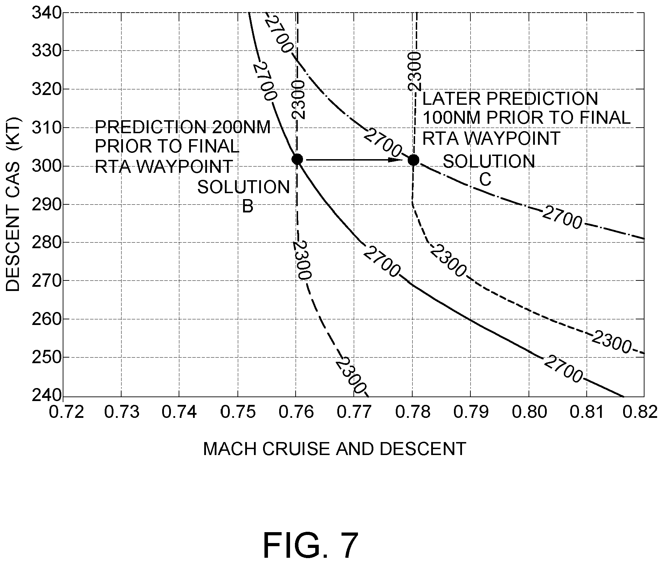

During the operation, uncertainties, such as wind forecast errors, may force the RTA function to recalculate the trajectory and correct the flight speeds in order to meet the RTA. This situation is depicted in figure 7. In this particular example and as explained in the previous paragraph, the aircraft firstly selects the speeds Mach=0.76 and CAS=302 KT to meet RTA WPT₁ and RTA WPT₂ when it is 200NM away from waypoint "DIRTY". After 100 NM the aircraft, which is continuously and dynamically monitoring the distances, speeds and estimated time of arrival, finds out significant time errors at both waypoints if the aircraft follows the trajectory given by the original cruise and descent speeds. Then, the aircraft recalculates the new isocontours of estimated arrival times. At this point the aircraft is about 50NM away from waypoint "ODF" and 100NM away from "DIRTY". The method searches for the new intersection of RTA₁= 2300s and RTA₂= 2700s. For these conditions and in order to meet both constraints, the aircraft has to correct its reference trajectory by selecting speeds Mach=0.78 and CAS=302 KT. This is represented in figure 7 as "Solution C".

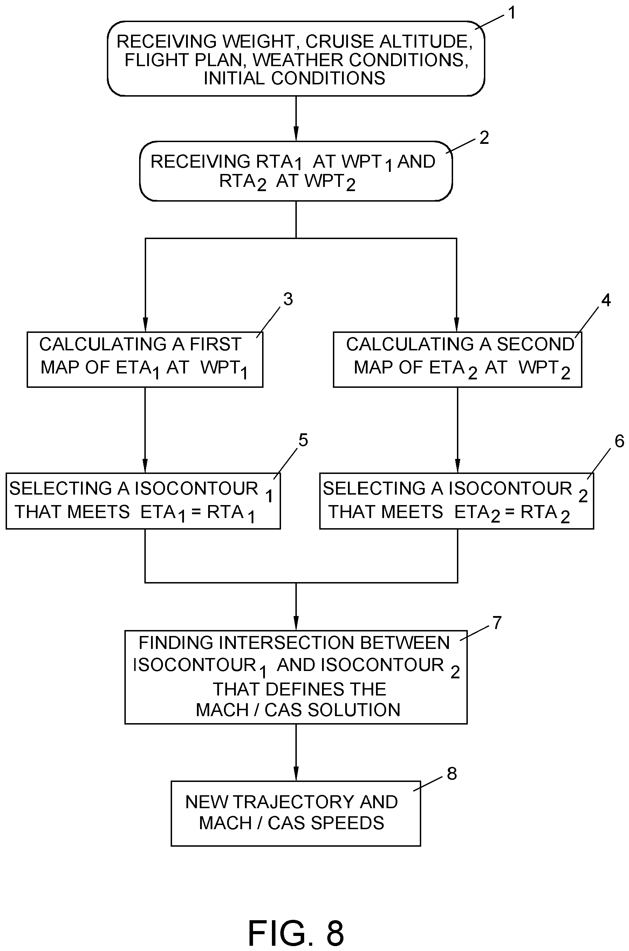

Figure 8 shows a flow diagram of a particular embodiment of the method of the present invention wherein only two RTA's are provided. The flow diagram comprises the following steps:
- receiving (1) a set of given conditions, said given conditions at least comprising the weight of the aircraft, the cruise altitude, the flight plan, the weather conditions and the initial conditions, at the time in which the RTA function is activated;
- receiving (2) a first required time of arrival (RTA₁) a first waypoint (WPT₁) ahead and a second required time of arrival (RTA₂) at a second waypoint ahead (WPT₂);
- calculating (3) a first map of estimated time of arrivals (ETA₁) at the first waypoint "WPT₁" within the speed limits and under the given conditions. Said first map is function of the cruise Mach and decent CAS of the aircraft. This is represented by the set of dashed isocontours of figure 6. Depending on CPU capabilities, this map can be calculated with more or less accuracy, but in principle it is simply a matter or calculating arrival times for a 2D grid of cruise Mach and descent CAS values. In figure 6, a total of 121 conditions (11 cruise Mach x 11 descent CAS) were used. Then, selecting (5) the only isocontours (isocontour₁) corresponding to the first required time of arrival (RTA₁) at "WPT₁" by finding the descent CAS that makes ETA₁=RTA₁ for a given cruise Mach or by finding the cruise Mach that makes ETA₁= RTA₁ for a given descent CAS;
- calculating (4) a second map of estimated time of arrivals (ETA₂) at the second waypoint "WPT₂" within the speed limits and under the given conditions. Said second map is function of the cruise Mach and decent CAS of the aircraft. This is represented by the thin solid isocontours of figure 6. Then, selecting (6) the only isocontour (isocontour₂) corresponding to the second required time of arrival (RTA₂) at "WPT₂" by finding the descent CAS that makes ETA₂= RTA₂ for a given cruise Mach or by finding the cruise Mach that makes ETA₂= RTA₂ for a given descent CAS;
- finding (7) the intersection of the selected "isocontour₁" and the "isocontour₂". This intersection defines the solution and the required cruise Mach and descent CAS combination; and,
- selecting (9) the cruise Mach and descent CAS, and so establish the new reference trajectory.

Since the use of maps and isocontours is a particular embodiment of the method described in the present application, in a most general solution, the method calculates a first set of Mach/CAS combinations that meets an ETA₁ at the WPT₁ and selects a first subset of Mach/CAS combinations, from the first set of Mach/CAS combinations, for which ETA₁=RTA₁. Then the method calculates a second set of Mach/CAS combinations that meets an ETA₂ at the WTA₂ and selects a second subset of Mach/CAS combinations, from the second set of Mach/CAS combinations, for which ETA₂=RTA₂. After that, the method compares the Mach/CAS combinations of the first subset with the Mach/CAS combinations of the second subset, selecting the only Mach/CAS combination existing in both subsets. This selection may be made by using a conventional two dimensional root-finding algorithm such as the Broyden's method. Other methods might be used for finding the root of the functions that define the sets of Mach/CAS combinations. Finally the method establishes a new reference trajectory based on the selected cruise Mach and descent CAS speeds combination.

The method herein disclosed permits to select a trajectory that meets at least two time constraints at different waypoints.

## Claims

1. A method of controlling the flight of an aircraft subjected to two required time of arrival constraints, comprising the step of:
a) receiving two required time of arrivals (RTA₁,RTA₂), each required time of arrival (RTA₁,RTA₂) at a corresponding target waypoint (WPT₁,WPT₂), each target waypoint (WPT₁,WPT₂) being different form each other and both target waypoints (WPT₁,WPT₂) being located in a descent phase of the flight; **characterised in that** it further comprises the steps of
b) determining a set of cruise speed and descent speed pairs for each one of the required time of arrivals (RTA₁,RTA₂) wherein each pair satisfies the corresponding required time of arrival (RTA₁,RTA₂) at the corresponding target waypoint (WPT₁,WPT₂);
c) selecting a single cruise speed and descent speed pair existing in each one of the sets of cruise speed and descent speed pairs; and,
d) determining a single aircraft trajectory that satisfies the selected cruise speed and descent speed pair.

2. The method of controlling the flight of an aircraft, according to claim 1, wherein step b) comprises determining each set of cruise speed and descent speed pairs by obtaining the descent speed that satisfies the corresponding required time of arrival (RTA₁,RTA₂) for a given cruise speed or by obtaining the cruise speed that satisfies the corresponding required time of arrival (RTA₁,RTA₂) for a given descent speed.

3. The method of controlling the flight of an aircraft, according to any previous claim, wherein step c) comprises executing a root-finding algorithm for selecting the single cruise speed and descent speed pair.

4. The method of controlling the flight of an aircraft, according to claim 1, wherein step b) comprises establishing (5, 6) contour maps wherein each isocontour of the contour map represents a subset of cruise speed and descent speed pairs that satisfies a single required time of arrival (RTA₁, RTA₂) at a corresponding target waypoint (WPT₁,WPT₂).

5. The method of controlling the flight of an aircraft, according to claim 4, wherein step d) comprises selecting (7) the single cruise speed and descent speed pair corresponding to the intersection of all the isocontours of the contour map.

6. The method of controlling the flight of an aircraft, according to any previous claim, wherein the method further comprises receiving (1) a set of flight conditions for delimiting aircraft speed limits comprising at least one of a weight of the aircraft, a cruise altitude, an aircraft speed and measured wind and temperature.

7. The method of controlling the flight of an aircraft, according to claim 6, wherein the received set of flight conditions further comprises a flight plan and forecast weather conditions.

8. The method of controlling the flight of an aircraft, according to claim 7, wherein the method further comprises computing a predicted flight trajectory of the aircraft based on the received set of flight conditions and the sets of cruise speed and descent speed pairs obtained in step b), the predicted flight trajectory comprising at least one of a predicted lateral path, estimated arrival times at the intermediate waypoints and estimated altitudes reached at the intermediate waypoints.

9. The method of controlling the flight of an aircraft, according to any previous claim, wherein the method is dynamically and continuously executed during flight so as to modify the single aircraft trajectory by changing the cruise speed and descent speed of the aircraft.

10. A system for controlling the flight of an aircraft subjected to at least two required time of arrival constraints, the system comprising a Flight Management Computer in communication with a trajectory generator and a speed profile generator, said Flight Management System being configured for executing the method disclosed in any of the preceding claims 1 to 9.

11. A system for controlling the flight of an aircraft of Claim 10, wherein the speed profile generator is configured for receiving a single cruise speed and descent speed pair and generating a speed profile signal in response to said single cruise speed and descent speed pair, and the trajectory generator is configured for receiving the speed profile signal and generating the single aircraft trajectory in response to the speed profile signal, so that the aircraft trajectory meets each required time of arrival (RTA₁,RTA₂) at the corresponding target waypoints (WPT₁,WPT₂).

12. The system for controlling the flight of an aircraft of any of claims 10 or 11, wherein the Flight Management System is configured for receiving a weight of the aircraft and a cruise altitude and determining the aircraft speed limits.

13. The system for controlling the flight of an aircraft, according to any of claims 10-12, wherein the Flight Management System is configured for receiving a flight plan, weather conditions, initial aircraft conditions and a cruise altitude and determining the sets of cruise speed and descent speed pairs corresponding to each one of the required time of arrivals (RTA₁,RTA₂).

14. A computer program comprising program code which, when executed, carries out the method of any of claims 1 to 9.

## Patentansprüche

1. Ein Verfahren zum Steuern des Fluges eines Flugzeugs, das zwei erforderlichen Ankunftszeitbeschränkungen unterliegt, mit dem Schritt:
a) Empfangen von zwei erforderlichen Ankunftszeiten (RTA₁, RTA₂), jede erforderliche Ankunftszeit (RTA₁, RTA₂) an einem entsprechenden Zielwegpunkt (WPT₁, WPT₂), wobei jeder Zielwegpunkt (WPT₁, WPT₂) sich von dem anderen unterscheidet und beide Zielwegpunkte (WPT₁, WPT₂) in einer Sinkflugphase des Fluges liegen;
**dadurch gekennzeichnet, dass** es ferner die Schritte:
b) Das Bestimmen eines Satzes von Reisegeschwindigkeiten und deaktivieren Sie die Geschwindigkeitspaare für jede der erforderlichen Ankunftszeiten (RTA₁, RTA₂), wobei jedes Paar die entsprechende erforderliche Ankunftszeit (RTA₁, RTA₂) am entsprechenden Zielwegpunkt (WPT₁, WPT₂) erfüllt;
c) Das Auswählen eines einzelnen Reisefluggeschwindigkeits- und Sinkfluggeschwindigkeitspaares, das in jedem der Sätze von Reisefluggeschwindigkeits- und Sinkfluggeschwindigkeitspaaren vorhanden ist; und
d) Das Bestimmen einer einzelnen Flugzeugflugbahn, die das ausgewählte Reisefluggeschwindigkeits- und Sinkfluggeschwindigkeitspaar erfüllt,
umfasst.

2. Das Verfahren zum Steuern des Fluges eines Flugzeugs nach Anspruch 1, wobei Schritt b) das Bestimmen jedes Satzes von Reisefluggeschwindigkeits- und Sinkfluggeschwindigkeitspaaren durch Gewinnung der Sinkfluggeschwindigkeit, die die entsprechende erforderliche Ankunftszeit (RTA₁, RTA₂) für eine gegebene Reisefluggeschwindigkeit erfüllt, oder durch Gewinnung der Reisefluggeschwindigkeit, die die entsprechende erforderliche Ankunftszeit (RTA₁, RTA₂) für eine gegebene Sinkfluggeschwindigkeit umfasst.

3. Das Verfahren zum Steuern des Fluges eines Flugzeugs nach einem der vorhergehenden Ansprüche, wobei Schritt c) die Ausführung einer numerischen Auflösung von nichtlinearen Gleichungen umfasst, zum Auswählen des einzelnen Reisefluggeschwindigkeits- und Sinkfluggeschwindigkeitspaares umfasst.

4. Das Verfahren zum Steuern des Fluges eines Flugzeugs nach Anspruch 1, wobei Schritt b) das Erstellen (5, 6) von Konturkarten umfasst, wobei jede Isokontur der Konturkarte eine Teilmenge von Reisefluggeschwindigkeits- und Sinkfluggeschwindigkeitspaaren darstellt, die eine einzige erforderliche Ankunftszeit (RTA₁, RTA₂) an einem entsprechenden Zielwegpunkt (WPT₁, WPT₂) erfüllt.

5. Das Verfahren zum Steuern des Fluges eines Flugzeugs nach Anspruch 4, wobei Schritt d) das Auswählen (7) des einzelnen Reisefluggeschwindigkeits- und Sinkfluggeschwindigkeitspaares entsprechend der Schnittstelle aller Isokonturen der Konturkarte umfasst.

6. Verfahren zum Steuern des Fluges eines Flugzeugs nach einem der vorhergehenden Ansprüche, wobei das Verfahren ferner umfasst: das Empfangen (1) eines Satzes von Flugbedingungen zum Begrenzen von Flugzeuggeschwindigkeitsgrenzen, umfassend mindestens eines von einem Gewicht des Flugzeugs, einer Reiseflughöhe, einer Flugzeuggeschwindigkeit und gemessener Wind und Temperatur.

7. Das Verfahren zum Steuern des Fluges eines Flugzeugs nach Anspruch 6, wobei der empfangene Satz von Flugbedingungen ferner einen Flugplan und vorhergesagte Wetterbedingungen umfasst.

8. Das Verfahren zum Steuern des Fluges eines Flugzeugs nach Anspruch 7, wobei das Verfahren ferner das Berechnen einer vorausgesagten Flugbahn des Flugzeugs basierend auf dem empfangenen Satz von Flugbedingungen und den in Schritt b) gewonnenen Sätzen von Reisefluggeschwindigkeits- und Sinkfluggeschwindigkeitspaaren umfasst, wobei die vorausgesagte Flugbahn mindestens einen von einem vorausgesagten lateralen Weg, geschätzte Ankunftszeiten an den Zwischenwegpunkten und geschätzte Höhen, die an den Zwischenwegpunkten erreicht werden, umfasst.

9. Das Verfahren zum Steuern des Fluges eines Flugzeugs nach einem der vorhergehenden Ansprüche, wobei das Verfahren dynamisch und durchgehend während des Fluges ausgeführt wird, um die einzelne Flugzeugflugbahn durch Ändern der Reisefluggeschwindigkeit und der Sinkfluggeschwindigkeit des Flugzeugs zu modifizieren.

10. Ein System zum Steuern des Fluges eines Flugzeugs, das mindestens zwei erforderlichen Ankunftszeitbeschränkungen unterworfen ist, wobei das System einen Flugmanagementcomputer in Verbindung mit einem Flugbahngenerator und einem Geschwindigkeitsprofilgenerator umfasst, wobei das Flugmanagementsystem zum Ausführen des in einem der vorhergehenden Ansprüche 1 bis 9 offenbarten Verfahrens ausgebildet ist.

11. Ein System zum Steuern des Fluges eines Flugzeugs nach Anspruch 10, wobei der Geschwindigkeitsprofilgenerator zum Empfangen eines einzelnen Reisefluggeschwindigkeits- und Sinkfluggeschwindigkeitspaares und zum Erzeugen eines Geschwindigkeitsprofilsignals in Erwiderung auf das einzelne Reisefluggeschwindigkeits- und Sinkfluggeschwindigkeitspaar ausgebildet ist, und der Flugbahngenerator zum Empfangen des Geschwindigkeitsprofilsignals und zum Erzeugen der einzelnen Flugzeugflugbahn in Erwiderung auf das Geschwindigkeitsprofilsignal ausgebildet ist, so dass die Flugzeugflugbahn jede erforderliche Ankunftszeit (RTA₁, RTA₂) an den entsprechenden Zielwegpunkten (WPT₁, WPT₂) erfüllt.

12. Das System zum Steuern des Fluges eines Flugzeugs nach einem der Ansprüche 10 oder 11, wobei das Flugmanagementsystem zum Empfangen eines Gewichts des Flugzeugs und einer Reiseflughöhe und zum Bestimmen der Flugzeuggeschwindigkeitsgrenzen ausgebildet ist.

13. Das System zum Steuern des Fluges eines Flugzeugs nach einem der Ansprüche 10 bis 12, wobei das Flugmanagementsystem zum Empfangen eines Flugplans, Wetterbedingungen, anfänglichen Flugzeugzuständen und einer Reiseflughöhe und zum Bestimmen der Sätze von Reisefluggeschwindigkeits- und Sinkfluggeschwindigkeitspaaren, die jeder der erforderlichen Ankunftszeiten (RTA₁, RTA₂) entsprechen, ausgebildet ist.

14. Ein Computerprogramm umfassend einen Programmcode, der, wenn er ausgeführt wird, das Verfahren nach einem der Ansprüche 1 bis 9 durchführt.

## Revendications

1. Un procédé de contrôle de vol d'un aéronef, soumis à deux contraintes de temps d'arrivée requis, comprenant l'étape de:
a) Recevoir deux temps d'arrivée requis (RTA₁, RTA₂), chacun en un point de destination correspondant (WPT₁, WPT₂), étant lesdits points de destination référence (WPT₁, WPT₂) différents entre eux et les deux se retrouvant dans une phase de descente de vol.
Caractérisé, parce que le vol comprend également les étapes de:
b) Déterminer un ensemble de vitesses de croisière et désélectionner les paires de vitesse pour chacun des temps d'arrivée requis (RTA₁, RTA₂), où chaque paire satisfaisant le temps d'arrivée requis correspondant (RTA₁, RTA₂) au point de destination correspondant (WPT₁, WPT₂).
c) Sélectionner une vitesse de croisière unique et une paire de vitesse de diminution existante, pour chacun des ensembles de paires de vitesse de croisière et vitesse de descente.
d) Déterminer une seule trajectoire pour un aéronef, qui satisfait les paires de vitesse de croisière et de vitesse de descente sélectionnées.

2. Un procédé de contrôle de vol d'un aéronef, en accord avec la revendication 1, dans lequel l'étape b) comprend déterminer chaque ensemble de paires de vitesse de croisière et de vitesse de descente, en obtenant la vitesse de descente qui satisfait le temps d'arrivée requis correspondant (RTA₁, RTA₂) pour une vitesse de croisière déterminée ou en obtenant la vitesse de croisière qui satisfait le temps d'arrivée requis correspondant (RTA₁, RTA₂), pour une certaine vitesse de descente.

3. Un procédé de contrôle de vol d'un aéronef, en accord avec quelconque des revendications précédentes, dans lequel l'étape c) comprend l'exécution d'une Résolution Numérique d'équations non linéaires, pour sélectionner les paires de vitesse de croisière et de vitesse de descente individuelles.

4. Un procédé de contrôle de vol d'un aéronef, en accord avec la revendication 1, dans lequel l'étape b) comprend établir de cartes de contour (5,6), ou chaque iso contour des cartes de contour représente un sous-ensemble de vitesse de croisière et paires de vitesse de descente, qui satisfont à un seul temps d'arrivée correspondant (RTA₁, RTA₂) en un point d'arrivée de référence correspondant (WPT₁, WPT₂).

5. Un procédé de contrôle de vol d'un aéronef, en accord avec la revendication 4, dans lequel l'étape d) comprend sélectionner (7) la seule paire de vitesse de croisière et vitesse de descente correspondant à l'intersection de tous les iso contours des cartes de contours.

6. Un procédé de contrôle de vol d'un aéronef, en accord avec quelconque des revendications précédentes, dans lequel le procédé comprend, en outre, recevoir (1) un ensemble de conditions de vol pour délimiter les limites de vitesse de l'aéronef, qui comprend au moins un des éléments suivants: poids de l'aéronef, altitude de croisière, vitesse de l'aéronef et le vent ou la température, mesurés.

7. Un procédé de contrôle de vol d'un aéronef, en accord avec la revendication 6, dans lequel l'ensemble reçu des conditions de vol comprend, en outre, un plan de vol et conditions météorologiques prévues.

8. Le procédé de contrôle de vol d'un aéronef, selon la revendication 7, comprenant, en outre, calculer une trajectoire de vol prévue de l'aéronef, basée sur l'ensemble des conditions de vol reçus et les ensembles des paires de vitesse de croisière et la vitesse de descente obtenus à l'étape b), la trajectoire de vol prévue comprend, au moins l'un des éléments suivants: la trajectoire latérale prédite, les temps d'arrivée estimés aux points intermédiaires ou altitudes estimées atteintes dans ceux-ci.

9. Un procédé de contrôle de vol d'un aéronef, en accord avec quelconque des revendications précédentes, qui s'exécute dynamiquement et continuellement durant le vol, pour modifier la trajectoire d'un seul aéronef en changeant la vitesse de croisière et la vitesse de descente de celui-ci.

10. Un procédé de contrôle de vol d'un aéronef, soumis à au moins deux restrictions de temps d'arrivée requises, comprenant un Ordinateur de Gestion de Vol en communication avec un Générateur de Trajectoire et un Générateur de Profil de Vitesse, étant configuré ledit Système de Gestion de Vol pour l'exécution du procédé décrit dans quelconque des revendications précédentes, de 1 à 9.

11. Un procédé de contrôle de vol d'un aéronef, en accord avec la revendication 10, dans lequel le Générateur de Profil de Vitesse est configuré pour recevoir une seule paire de vitesse de croisière et vitesse de descente et générer en réponse, un signal de profil de vitesse. Le Générateur de Trajectoire est configuré pour recevoir le signal de profil de vitesse et générer la trajectoire d'un seul aéronef, en réponse au signal de profil de vitesse, de sorte que la trajectoire de l'aéronef respecte chaque temps d'arrivée requis (RTA₁, RTA₂), aux points de destination de référence correspondante (WPT₁, WPT₂).

12. Le système de contrôle du vol d'un aéronef, en accord avec quelconque des revendications 10 ou 11, dans lequel le Système de Gestion de Vol est configuré pour recevoir le poids de l'aéronef et l'altitude de croisière et déterminer ainsi les limites de vitesse de la même.

13. Un procédé de contrôle de vol d'un aéronef, en conformité avec quelconque des revendications 10 à 12, dans lequel le Système de Gestion de Vol est configuré pour recevoir un plan de vol, les conditions climatiques, les conditions initiales de l'aéronef et l'altitude de croisière, pour ainsi déterminer les ensembles de paires vitesse de croisière et vitesse de descente correspondantes à chacun des temps d'arrivée requis (RTA₁, RTA₂).

14. Un programme d'ordinateur qui comprend un code de programme qui, lorsqu'il est exécuté, met en oeuvre le procédé de quelconque des revendications de 1 à 9.
